# EUROPEAN PATENT SPECIFICATION

(11) **EP 1 740 040 B1**
(45) Date of publication and mention of the grant of the patent: **26.09.2007**
(21) Application number: 05722322.4
(22) Date of filing: 12.04.2005
(51) Int. Cl.: A01K 39/01

(54) **ILLUMINATED BIRD TABLE**
BELEUCHTETE VOGELFUTTERSTELLE
MANGEOIRE POUR OISEAUX ECLAIREE

(30) Priority: 30.04.2004 SE 0401125
(43) Date of publication of application: 10.01.2007
(73) Proprietor: Haglund, Joori, 685 92 Torsby (SE)
(72) Inventor: Haglund, Joori, 685 92 Torsby (SE)
(74) Representative: Andréasson, Ivar
(86) International application number: PCT/SE2005/000519
(87) International publication number: WO 2005/104831

(56) References cited:
- CA-A1- 2 253 774
- US-A- 5 413 069

## Description

### TECHNICAL FIELD

The present invention relates to an illuminated bird table comprising a seed table, a seed container, side walls enclosing the seed container and having windows, a roof, an opening in the roof for the replenishment of seeds, a lid arranged on top of the roof opening, and an illumination device arranged outside the seed container but inside the space defined by the roof and the side walls.

### PRIOR ART

Many people find it a pleasant duty to be able to feed birds, especially at wintertime, at a location close to their homes. Many different types of devices/methods are known to accomplish this, such as oat sheaves, tallow balls, bird tables etc. Bird tables exist in a variety of shapes, whereof those having roofs and being of small house-like designs have gained great popularity. One advantage of that type of bird table design is that it enables the storing of quite a large amount of bird seeds under a roof, to achieve a protection against moist in the form of rain, which in turn means that the seeds will keep the quality for a longer time.

However, a drawback that can not be avoided in connection with bird tables of today is a general moist problem, i.e. moist from mists and dew e.g., especially in connection with the formation of ice. Of course, such moist has a negative influence on the keeping of quality of the seeds, and also a negative effect on the structure as such, such as by erosion of constituent metal objects/parts. It is evident that the formation of ice constitutes a special problem, since it may make it impossible to feed out seeds.

Another problem of the known devices is that they quite often are hard to place such that the bird table is adequately illuminated when daylight is not enough, since it most often is difficult to place them at a position where some other illumination provided in connection with the housing can solve this problem.

From US 5,413,069, a bird table of the above described type is known (corresponding to the preamble of Claim 1), in which illumination has been provided directly at the bird table. However, this known design has a plurality of drawbacks. Firstly, the illumination arrangement is such that only a limited illumination can be achieved. Furthermore, the seed container is disadvantageous from several aspects. Firstly, it is arranged as a separate and fairly complex unit, which means an increased cost. Secondly, it is arranged such that seed dust, whirling up in connection with the replenishment, can contaminate the glass walls of the bird table, resulting in impaired transparency. From the Swedish Registration of Design No. 58 495 is also known a bird table that exhibits some of the drawbacks mentioned above, but above all the major drawback that the light bulb intended to provide illumination is placed inside the structure, such that illumination is considerably reduced when the amount of seeds is large.

### BRIEF DESCRIPTION OF THE INVENTION

It is an object of the present invention to eliminate, or at least minimize, any one of the above mentioned problems, which is achieved by a bird table according to claim 1.

Thanks to a design according to the invention, many advantages are attained. Firstly, it encompasses that the seed container is arranged by carrying the roof to constitute an integral part of the structure, such that a more cost efficient structure is achieved. Furthermore, the utilisation of the bird seed container as a reflector results in considerable advantages. On the one hand, this means that the seed container can profit from a major part of the generation of heat, whereby the general moist problem and especially the formation of ice is prevented. On the other hand, it provides beneficial requirements for an optimal type of illumination, not only at the bird table itself, but also around it, such that the bird table may function also as outdoor lighting.

According to further aspects of the invention:
- the said roof opening is arranged to form a means for anchoring said roof to said seed container, resulting in a particularly advantageous design solution to carry the roof,
- said illumination device is anchored at said outer surface, whereby additional design advantages are obtained since the centrally positioned seed container constitutes anchoring means also for the illumination,
- also the inner surface of said roof is arranged to constitute a reflector for said illumination, whereby the possibilities of providing optimal illumination are additionally improved, also functioning as outdoor lighting. According to an especially preferred embodiment, the illumination device is positioned at a level above the lower edge of said roof, the advantage being attained that annoying direct illumination is eliminated.
- the said inner roof surface is arranged at an angle α relative the horizontal plane, which angle α is between 5-60°, 20-45°, whereby both an efficient protection from rain and a good reflection angle for the illumination, can be achieved,
- at least at their upper portion, the wall sections of the seed container extend straight up, preferably in the vertical plane, resulting in the possibility of enabling a particularly cost efficient production,
- the said roof opening is arranged with an inner configuration that matches the outer cross-sectional configuration, at least of the upper portion, of said seed container, resulting in the advantage that the seed container can be replenished without risk of actual contamination from seed dust on the panes of the side walls. According to a particularly preferred embodiment, the seed container is arranged with a uniform cross-section along its entire length.
- at its lower end, the seed container is connected with said side walls by connecting means, said connecting means being arranged to shield a considerable area of the space between the lower edge of the seed container and the side walls, whereby the risk of contamination from seed dust on the glass panes is additionally eliminated,
- the said connecting means are constituted by flanged portions, preferably integral with the container and extending essentially perpendicularly relative the longitudinal direction of the seed container, resulting in that a particularly cost efficient production can be achieved, especially when the container is made of sheet metal,
- the said illumination device comprises a plurality of light bulbs, a plurality of light bulb bases being distributed, preferably at the same level, about the outer surface of the seed container, which is beneficial for the purpose of achieving uniform and optimal illumination and also a uniform distribution of heat to the seed container,
- at least in the area of said illumination, the outer surface of the seed container is provided with a reflecting surface layer, with the advantage that the illumination can be further optimised.

### BRIEF DESCRIPTION OF THE DRAWINGS

In the following, the invention will be described in greater detail with reference to the attached drawing figures, of which:
- Fig. 1: shows a preferred embodiment of an illuminated bird table according to the invention, as seen from the side,
- Fig. 2: shows a bird table according to Fig. 1, as seen from above, in a cross-section according to the marking in Fig. 1,
- Fig. 3: shows the bird table according to Fig. 1 in a vertical cross-section according to the marking in Fig. 2,
- Fig. 4: shows an exploded view of a bird table according to Fig. 1, as seen from the side and partly in cross-section,
- Fig. 5: shows the bird table according to Fig. 1, arranged on a post, and
- Fig. 6: shows the bird table arranged at a wall.

### DETAILED DESCRIPTION

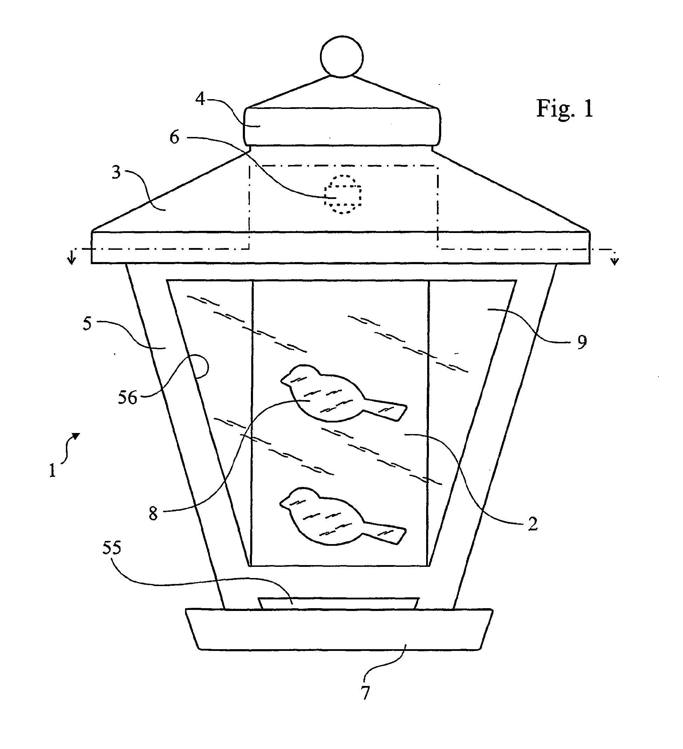

Fig. 1 shows a preferred embodiment of an illuminated bird table according to a preferred embodiment of the invention, as seen in a side view. The base members of the structure comprise the seed table 7 at the bottom, outer side walls 5 having windows 9 and extending up from the table, a roof 3 arranged above the side walls 5, a lid 4 arranged at the centre of the roof, and a seed container 2 arranged centrally inside the structure. In order to provide said illumination, light bulbs 6 have been arranged inside the seed container, and also openings 8 that are shaped as the outline of birds and having the function of enabling assessment of the amount of seeds in the seed container 2. Finally, it is shown that the side walls are provided at the bottom with an opening 55 to feed out seeds to the seed table 7.

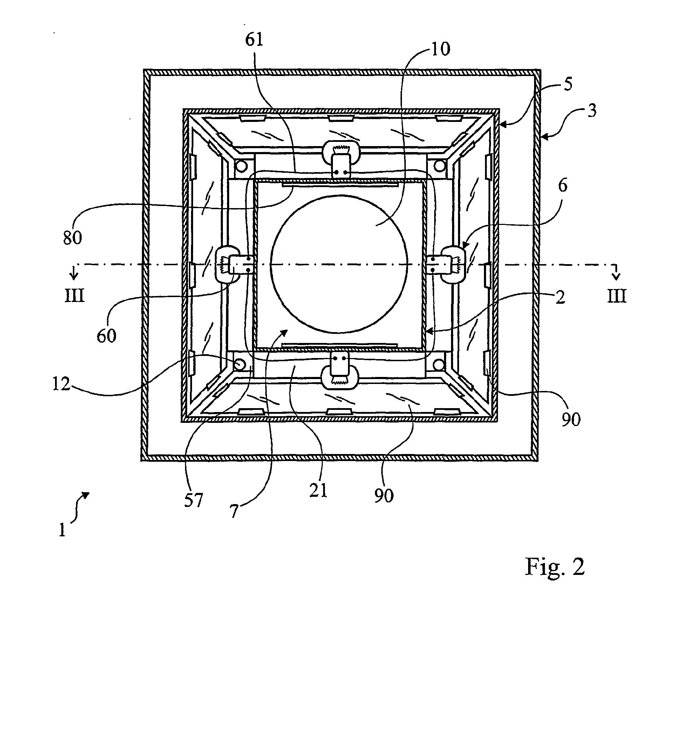

Fig. 2 shows a cross-section of the bird table according to the marking in Fig. 1. It is evident that the roof 3, the side walls 5 as well as the seed container 2 all have the same cross-sectional shape (in this case a square shape), which gives some constructional advantages and is also, by many people, considered to be aesthetically appealing. Accordingly, each of the parts mentioned above comprises four uniform parts that together form the respective constructional part. As to the side walls 5, it may be noted that each window 9 takes up a considerable part of the surface. Accordingly, large openings 56 are arranged in each one of the side walls 5, and are covered on the inside by glass plates 9. As is known per se, these glass plates 9 have a width and length that is somewhat larger than the opening 56, and are kept in place on the inside of the respecttive side walls by a plurality of clamps 90. Thanks to each side wall 5 being outwardly inclined (as seen from below), the gravity will help in keeping the window glasses 9 in place. Foot portions 57 are arranged at the bottom, in the corner areas of side walls 5, which foot portions connect the side walls 5 with the seed table 7, by aid of attachment means 12 (such as rivets). The seed container 2 is arranged centrally relative to the side walls 5. At its lower end, the seed container 2 is provided with perpendicular flanges 21. These flanges 21 are formed, most simply, by cutting each corner of the container 2 and folding out the respective cut portion. By this flange 21, a fixing is achieved of the container 2 to the side walls 5, at some distance above the seed table 7. In the shown embodiment, this is achieved by the flanges 21 being welded to the side walls 5, at a level close below the openings 56 in the side walls 5. Thereby, it is also achieved that the major part of the area between the container 2 and the side walls 5 is sealed off, and preferably that the lower edges of the glasses 9 may rest on the flange 21.

It is further shown that the container 2 is provided with four light bulbs 6, including bases 60 and wires 61. It is clear that the light bulbs 6 suitably are positioned symmetrically, in the centre of each side of the seed container 2. It is also shown that glass plates 80 are provided at two opposing inside surfaces of the seed container 2, which glass plates function to seal the openings 8 (see Fig. 1) used for indication of the amount of seeds in the container 2.

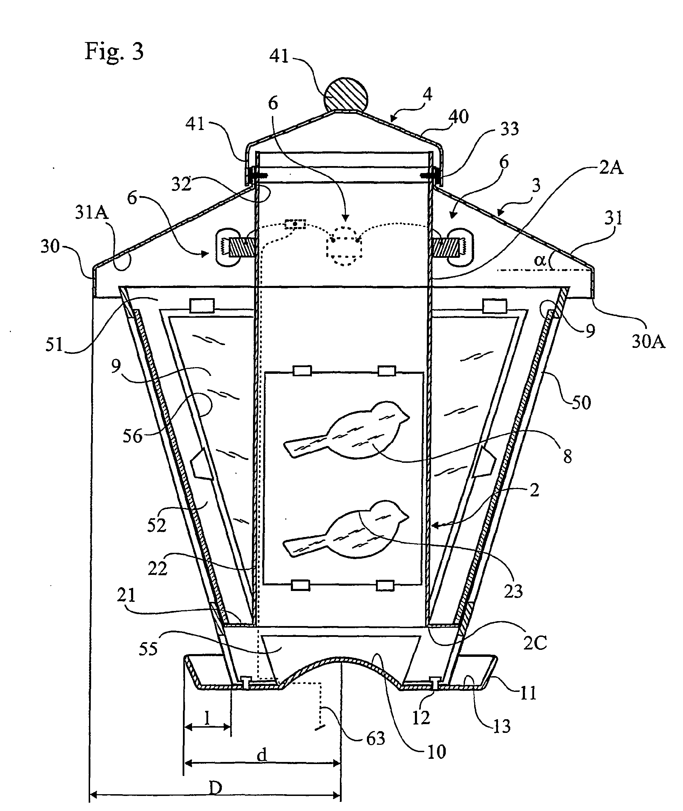

Fig. 3 shows a vertical cross-section of a bird table. It is shown that in the area below the seed container 2, the seed table 7 is provided with a cupola-shaped elevation 10, functioning to distribute seeds laterally out towards the outer edges 11 of the seed table 7. These outer edges 11 extend obliquely upwards from the bottom surface 13 of the seed table, such that a shape is achieved similar to a trough, for storing bird seeds fed down through the seed container 2 and out via the openings 55. The openings 55 are arranged centrally on each side wall 5, and extend from the seed table 7 and up to an area close below the lower end of the seed container 2. The largest width of the opening 55 is suitably about the same as the cross-sectional width of the seed container 2.

It is also shown in Fig. 3 that the side walls are arranged with a certain inclination, by being arranged to slope outwards, as seen from the bottom and up, which inclination suitably is within the range of 15-30 °. This inclination has, among other things, the advantage that a space is formed at the top, between the seed container 2 and the side walls 5, resulting in easy access for cleaning the glasses 9 etc. It is also clear that the seed table 7 is arranged to have a projecting portion of a relatively limited length 1 in relation to its total width 2d, resulting in the advantage that contaminants largely can be avoided, since the birds are prevented thereby from sitting with their tails towards the centre of the bird table. It is also clear that the width 2D of the roof is considerably larger than the width 2d of the seed table, which has the advantage that direct moist, in the form of rain, can not to any appreciable extent fall directly on the seed table 7.

Fig. 3 also shows that in the preferred embodiment, the roof 3 is attached by screws 33, to the seed container 2. For this purpose, the roof 3 is provided at its top with a flanged portion 32, the inner cross-sectional dimension of which being adapted to the outer cross-sectional dimension of the seed container 2, such that it can be fitted with a suitable clearance on the outside of the seed container 2, by being slipped onto the upper portion of the seed container and being attached thereto by said screw 33. Thanks to this design, the roof 3 is carried by the seed container 2, which in turn is carried by the side walls 5 standing on the seed table 7. Thus, the design allows for a simple, cost efficient and stable anchoring of the constituent parts. The roof has a sloping portion 31, sloping about 30-45°, relative the horizontal plane, and peripherically about the outer portion thereof, an edge 30 is arranged vertically down. All constituent parts form an integral unit. Accordingly, the roof 3 is fixed at the seed container 2 by aid of said flange 32 and holes for a screw 33 arranged therein.

As already mentioned, the seed container 2 is fixed at the side walls 5 by the flanges 21 arranged at the lower end of the seed container. Fig. 3 also shows that the glass plates 80, covering the openings 8 in the seed container 2, are arranged in principle in the same way as glass plates 9 are arranged at the side walls 5, i.e. by a simple type of holding means 88. The light bulbs 6, that preferably are four to the number and fed by low voltage (such as 12 volts) via a transformer (not shown), are suitably positioned at a level above the lower edge 30A of the roof 3, whereby annoying and outwards directed direct illumination can be avoided. Instead, the outwards facing surface 2A of the seed container, and also the downwards facing surface 31A of the roof, are used to achieve beneficial reflection of the light from the bulbs 6, such that good illumination is achieved without annoying direct light. At the same time, this positioning of the bulbs means that birds coming to the table to feed, will be directly illuminated to a certain extent, such that extra good illumination is achieved to view the birds at the table. Thanks to the design, not only is it achieved illumination that brings out the birds, but also an illumination functioning as outdoor lighting. The power supply for the four (or other number of) bulbs is provided with a common wire 63, preferably being led up through the bird table from below.

The said lid 4 is arranged on top of the upper end of the seed container. Similarly to the roof, the lid 4 is provided with an outer and downwards directed peripheral edge 41. This edge 41 is adapted to fit on the outside of the upper end of the seed container 2 and the flange 32 of the roof with its screw union 33. Similarly to the roof, the lid-shaped part 40 has a certain inclination, suitably being the same as for the roof. At the centre upper side of the roof, a knob 41 is arranged to provide a part that is easy to grip in order to lift off the roof. Thanks to the design with the roof being directly attached to the seed container 2, such that the upper end 2B of the seed container projects above, or at least essentially level with, the edge of the flange 32 of the roof, the opening for the seed container is directly accessible when the lid 4 is lifted off. In turn, this means that there is no risk of spilling at replenishment, since the seeds will either end up directly in the seed container 2, or fall down on the roof without any possibility of ending up at some other location inside the bird table. Moreover, it is avoided that seed dust can move form above and down towards the inner sloping glass surfaces.

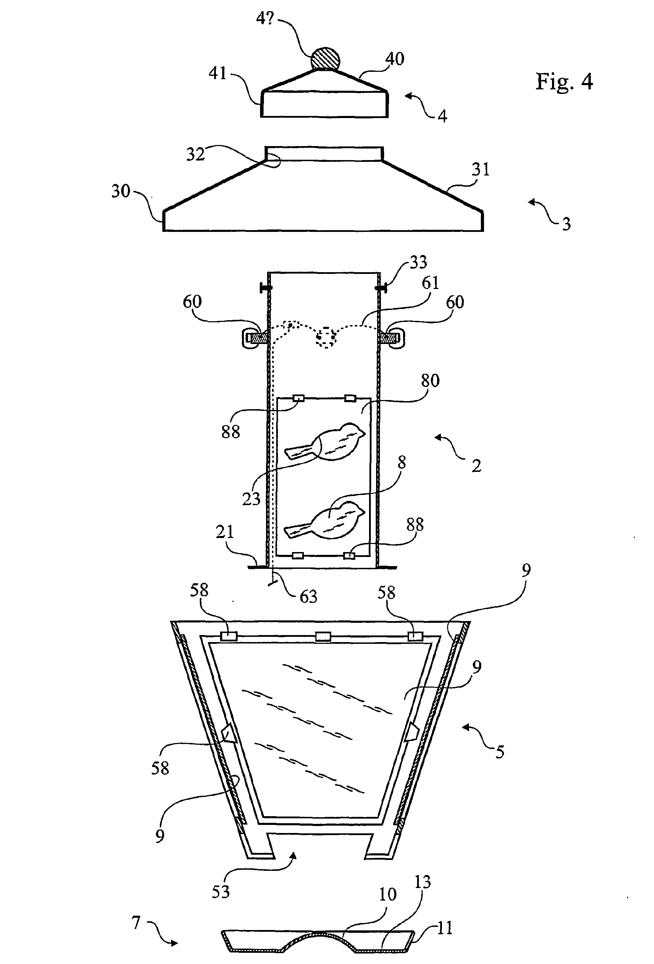

Fig. 4 shows an exploded side view of a preferred embodiment according to the above, in some aspects making it more clear which portions that belong to the respective constituent parts. For the general understanding, it is however referred to the description according to the above.

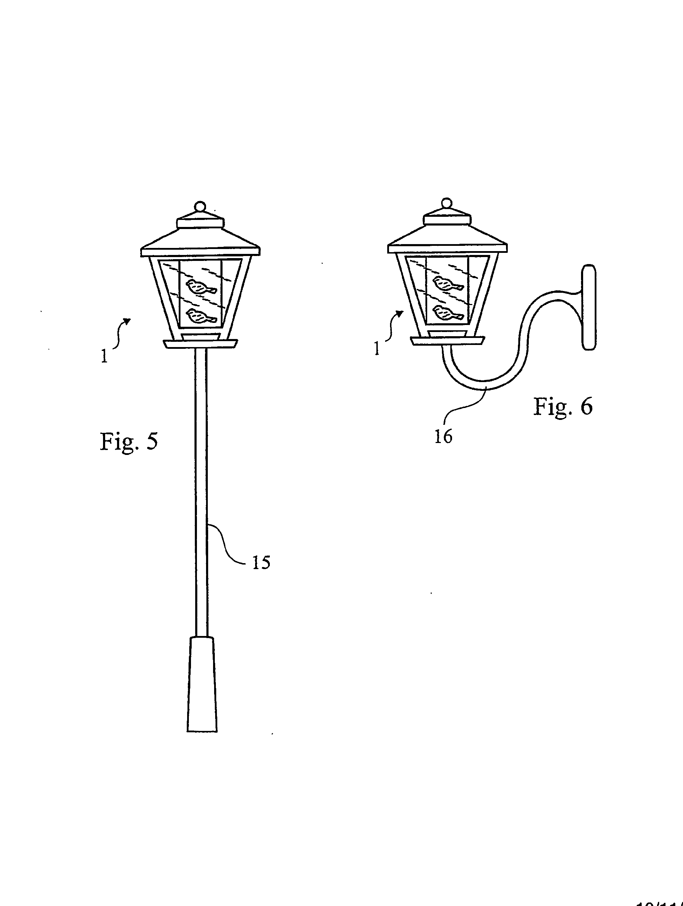

Figs. 5 and 6 show a bird table 1, illuminated according to the invention and according to two different embodiments of mounting. Fig. 5 shows the bird table 1 mounted at a pole 15, and Fig. 6 shows the bird table 1 mounted at a bracket member 16 intended for wall mounting. In both cases, the electrical wire (not shown) is arranged inside the mounting structure.

The invention is not limited to what has been shown above but may be varied within the scope of the claims. It is realised among other things that the skilled person may use many different types of light fittings to achieve the function according to the invention, such as light fittings with a feed voltage corresponding to the line voltage (i.e. 220 volts), high intensity diodes etc. It is furthermore realised that the cross-sectional configuration of the different constituent parts can be varied without deviating from the basic concept of the invention, e.g. by being hexagonal, octagonal or circular, and also that the different constituent parts can be of different types of configuration. It is also realised that depending on circumstances, the choice of materials can be varied widely, sheet metal being the most optimal for one type of production and thermoplastics or some other type of polymer being more preferred for some other type of production, and that a variety of production methods can be used for the manufacturing and assembly of the bird table, examples for sheet metal constructions being bending, welding, punching, and for plastic constructions die casting. It is also realised that the shown embodiment is easily modified in order to obtain a design that is totally sealed between the seed container 2 and the side walls 5, such that no contamination of the glass plates 9 can occur at all due to seed dust from the lower mouth of the seed container. It is also realised that the inclination of the different constituent parts of the design can be varied widely, in order all the same to achieve the function for which the invention aims, it being realised e.g. that in an extreme case the side walls 5 may be arranged to be essentially vertical.

It is also realised that the reflecting surface 2A, 31A of the seed container 2 and/or the inner surface 31 of the roof, can be provided in a variety of ways, in many occasions a white coating or some type of metal layer being an optimal solution. Such a surface may be provided e.g. by painting or applying a foil. It is also realised that the construction according to the invention will function also without the cupola-type member 10 of the seed table, i.e. a totally planar surface 13 will also serve the purpose of the invention.

## Claims

1. An illuminated bird table comprising a seed table (7), a seed container (2), side walls (5) enclosing the seed container and having windows (9), a roof (3), an opening (32) in the roof for the replenishment of seeds, a lid (4) arranged on top of the roof opening (32), and an illumination device (6) arranged outside the seed container (2) but inside the space defined by the roof (3) and the side walls (5), **characterised in that** said seed container (2) is arranged to constitute an anchorage for said roof (3), and that the outer surface (2A) of said seed container (2) is arranged to be a reflector for the light from said illumination device (6).

2. A bird table according to claim 1, **characterised in that** said roof opening (32) is arranged to form means for anchoring of said roof (3) at said seed container (2).

3. A bird table according to claim 1 or 2, **characterised in that** said illumination device (6) is anchored at said outer surface (2A).

4. A bird table according to any one of claims 1, 2 or 3, **characterised in that** also the inner surface (31A) of said roof (3) is arranged to be a reflector for said illumination (6), the illumination device (6) preferably being arranged at a level above the lower edge (33A) of said roof (3).

5. A bird table according to claim 4, **characterised in that** said inner roof surface (31A) is arranged at an angle (α) relative the horizontal plane, which angle (α) is between 5-60°, preferably 20-45°.

6. A bird table according to any one of the preceding claims, **characterised in that** at least at the upper portion of the seed container (2), its wall sections extend straight up, preferably in the vertical plane.

7. A bird table according to any one of claims 2-6, **characterised in that** said opening (32) is provided with an inner configuration that matches the outer cross-sectional configuration of at least the upper portion of said seed container (2), the seed container (2) preferably being of uniform cross-section along its entire extension.

8. A bird table according to any one of the preceding claims, **characterised in that** at its lower end (2C), the seed container (2) is connected by connecting means (21) to said side walls (5), said connecting means (21) being arranged to shield a major part of the space between the lower edge (2C) of the seed container and the side walls (5).

9. A bird table according to claim 8, **characterised in that** said connecting means (21) are constituted by flanged portions, preferably integral with the seed container (2) and extending essentially perpendicularly relative the longitudinal direction of the seed container (2).

10. A bird table according to any one of the preceding claims, **characterised in that** said illumination device (6) comprises a plurality of light bulbs, a plurality of light bulb bases (60) being distributed, preferably essentially at the same level, about the outer surface (2A) of the seed container.

11. A bird table according to any one of the preceding claims, **characterised in that** at least in the area of said illumination (6), the outer surface (2A) of the seed container is provided with an outer reflecting layer.

## Patentansprüche

1. Eine beleuchtete Vogelfutterstelle, umfassend eine Samen-Futterstelle (7), einen Samen-Behälter (2), Seitenwände (5), welche den Samen-Behälter umfassen und Fenster (9), ein Dach (3), eine Öffnung (32) im Dach zur Auffüllung der Samen, einen Deckel (4), der am oberen Ende der Dachöffnung (32) angeordnet ist, und eine Beleuchtungsvorrichtung (6), die außerhalb des Samen-Behälters (2), aber innerhalb des durch das Dach (3) und die Seitenwände (5) festgelegten Raums angeordnet ist, aufweisen, **dadurch gekennzeichnet, dass** der Samen-Behälter (2) angeordnet ist, um eine Befestigung für das Dach (3) festzulegen, und dass die äußere Oberfläche (2A) des Samen-Behälters (2) angeordnet ist, um als Reflektor für das Licht der Beleuchtungsvorrichtung (6) zu dienen.

2. Eine Vogelfutterstelle gemäß Anspruch 1, **dadurch gekennzeichnet, dass** die Dachöffnung (32) angeordnet ist, um Mittel zur Befestigung des Dachs (3) an dem Samen-Behälter (2) zu bilden.

3. Eine Vogelfutterstelle gemäß Anspruch 1 oder 2, **dadurch gekennzeichnet, dass** die Beleuchtungsvorrichtung an der äußeren Oberfläche (2A) befestigt ist.

4. Eine Vogelfutterstelle gemäß einem der Ansprüche 1, 2 oder 3, **dadurch gekennzeichnet, dass** auch die innere Oberfläche (31A) des Dachs (3) angeordnet ist, um als Reflektor für die Beleuchtung zu dienen, wobei die Beleuchtungsvorrichtung vorzugsweise auf einer Ebene überhalb des unteren Endes (33A) des Dachs (3) angeordnet ist.

5. Eine Vogelfutterstelle gemäß Anspruch 4, **dadurch gekennzeichnet, dass** die innere Dachoberfläche (31A) in einem Winkel (α) bezüglich der waagrechten Fläche angeordnet ist, wobei dieser Winkel (α) zwischen 5-60°, vorzugsweise 20-45°, beträgt.

6. Eine Vogelfutterstelle gemäß einem der vorhergehenden Ansprüche, **dadurch gekennzeichnet, dass** sich die Wandabschnitte zumindest im oberen Teil des Samen-Behälters (2) geradlinig nach oben, vorzugsweise in der senkrechten Fläche, erstrecken.

7. Eine Vogelfutterstelle gemäß einem der Ansprüche 2 bis 6, **dadurch gekennzeichnet, dass** die Öffnung (32) mit einer inneren Anordnung versehen ist, welche an die äußere Querschnittsanordnung von zumindest dem oberen Teil des Samen-Behälters (2) angepasst ist, wobei der Samen-Behälter (2) vorzugsweise über seine gesamte Ausdehnung einen gleichförmigen Querschnitt aufweist.

8. Eine Vogelfutterstelle gemäß einem der vorhergehenden Ansprüche, **dadurch gekennzeichnet, dass** der Samen-Behälter (2) an seinem unteren Ende (2C) mittels Verbindungsmittel (21), welche einen Großteil des Raums zwischen dem unteren Ende (2C) des Samen-Behälters und den Seitenwänden (5) schützen, mit den Seitenwänden (5) verbunden ist.

9. Eine Vogelfutterstelle gemäß Anspruch 8, **dadurch gekennzeichnet, dass** die Verbindungsmittel (21) durch angeflanschte Teile, vorzugsweise integral mit dem Samen-Behälter (2) und sich im Wesentlichen senkrecht bezüglich der Längsrichtung des Samen-Behälters (2) erstreckend, gebildet werden.

10. Eine Vogelfutterstelle gemäß einem der vorhergehenden Ansprüche, **dadurch gekennzeichnet, dass** die Beleuchtungsvorrichtung (6) mehrere Glühlampen umfasst, wobei mehrere Glühlampen-Fassungen (60) über die äußere Oberfläche (2A) des Samen-Behälters verteilt sind, vorzugsweise im Wesentlichen auf der gleichen Ebene.

11. Eine Vogelfutterstelle gemäß einem der vorhergehenden Ansprüche, **dadurch gekennzeichnet, dass** die äußere Oberfläche (2A) des Samen-Behälters zumindest im Bereich der Beleuchtung (6) mit einer äußeren reflektierenden Schicht versehen ist.

## Revendications

1. Mangeoire à oiseaux éclairée comprenant un plateau à graines (7), un récipient à graines (2), des parois latérales (5) entourant le récipient à graines et comprenant des fenêtres (9), un toit (3), une ouverture (32) dans le toit pour le remplissage de graines, un couvercle (4) agencé sur l'ouverture de toit (32), et un dispositif d'éclairage (6) disposé à l'extérieur du récipient à graines (2) mais à l'intérieur de l'espace défini par le toit (3) et les parois latérales (5), **caractérisée en ce que** ledit récipient à graines (2) est agencé pour constituer un ancrage pour ledit toit (3), et **en ce que** la surface extérieure (2A) dudit récipient à graines (2) est agencée pour être un réflecteur pour la lumière dudit dispositif d'éclairage (6).

2. Mangeoire à oiseaux selon la revendication 1, **caractérisée en ce que** ladite ouverture de toit (32) est agencée pour former des moyens d'ancrage dudit toit (3) audit récipient à graines (2).

3. Mangeoire à oiseaux selon la revendication 1 ou 2, **caractérisée en ce que** ce ledit dispositif d'éclairage (6) est ancré à ladite surface extérieure (2A).

4. Mangeoire à oiseaux selon l'une quelconque des revendications 1, 2 ou 3, **caractérisée en ce que** la surface intérieure (31A) dudit toit (3) est également agencée pour être un réflecteur pour ledit éclairage (6), le dispositif d'éclairage (6) étant de préférence agencé à un niveau situé au-dessus du bord inférieur (33A) dudit toit (3).

5. Mangeoire à oiseaux selon la revendication 4, **caractérisée en ce que** ladite surface intérieure de toit (31A) est agencée sous un angle (α) par rapport au plan horizontal, lequel angle (α) est compris entre 5 et 60°, de préférence entre 20 et 45°.

6. Mangeoire à oiseaux selon l'une quelconque des revendications précédentes, **caractérisée en ce que** ses sections de parois s'étendent directement vers le haut, de préférence dans le plan vertical, au moins sur la partie supérieure du récipient à graines (2).

7. Mangeoire à oiseaux selon l'une quelconque des revendications 2 à 6, **caractérisée en ce que** ladite ouverture (32) a une configuration intérieure qui est compatible avec la configuration de section extérieure d'au moins la partie supérieure dudit récipient à graines (2), le récipient à graines (2) étant de préférence de section uniforme le long de son corps entier.

8. Mangeoire à oiseaux selon l'une quelconque des revendications précédentes, **caractérisée en ce qu'**à son extrémité inférieure (2C), le récipient à graines (2) est relié par des moyens de connexion (21) auxdites parois latérales (5), lesdits moyens de connexion (21) étant agencés pour protéger une majeure partie de l'espace entre le bord inférieur (2C) du récipient à graines et des parois latérales (5).

9. Mangeoire à oiseaux selon la revendication 8, **caractérisée en ce que** lesdits moyens de connexion (21) sont constitués par des parties formant bride, de préférence venant de corps avec le récipient à graines (2) et s'étendant essentiellement perpendiculairement par rapport à la direction longitudinale du récipient à graines (2).

10. Mangeoire à oiseaux selon l'une quelconque des revendications précédentes, **caractérisée en ce que** ce ledit dispositif d'éclairage (6) comprend une pluralité d'ampoules, une pluralité de douilles d'ampoules (60) étant disposée, de préférence essentiellement au même niveau, à côté de la surface extérieure (2A) du récipient à graines.

11. Mangeoire à oiseaux selon l'une quelconque des revendications précédentes, **caractérisée en ce qu'**au moins dans la zone dudit éclairage (6), la surface extérieure (2A) du récipient à graines est équipée d'une couche réflectrice externe.
